# FASCICULE DE BREVET EUROPEEN

(11) **EP 1 272 430 B1**
(45) Date de publication et mention de la délivrance du brevet: **17.05.2006**
(21) Numéro de dépôt: 01917193.3
(22) Date de dépôt: 20.03.2001
(51) Int. Cl.: C02F 1/24, B03D 1/14

(54) **DISPOSITIF ET PROCEDE DE TRAITEMENT D'EAU PAR ECUMAGE**
VERFAHREN UND VORRICHTUNG ZUR BEHANDLUNG VON WASSER MITTELS FLOTATION
DEVICE AND METHOD FOR WATER TREATMENT BY FOAMING

(30) Priorité: 03.04.2000 FR 0004211
(43) Date de publication de la demande: 08.01.2003
(73) Titulaire: Institut Francais de Recherche pour l'Exploitation de la Mer (IFREMER), 92130 Issy-les-Moulineaux Cedex (FR)
(72) Inventeur: HUSSENOT, Jérôme, F-17000 La Rochelle (FR); LEJEUNE, Armand, F-85580 Saint-Michel-en-l'Herm (FR)
(74) Mandataire: Texier, Christian
(86) Numéro de dépôt international: PCT/FR2001/000833
(87) Numéro de publication internationale: WO 2001/074722

(56) Documents cités:
- DE-A- 2 727 398
- DE-A- 19 618 428
- DE-U- 29 808 690
- US-A- 4 690 756
- US-A- 5 192 423
- US-A- 5 273 624

## Description

L'invention concerne le domaine du traitement des eaux usées, des eaux salées ou saumâtres, issues des activités de l'industrie, des activités maritimes, comme le stockage des produits de la mer ou de l'aquaculture, des activités de loisirs, etc.. Plus précisément, il s'agit d'un dispositif et d'un procédé de traitement d'eau par écumage. Selon ce traitement, on combine une opération de production de microbulles pour générer de l'écume et des opérations d'écumage et flottation.

On connaît déjà, par exemple par le document DE 197 56 962, un dispositif de traitement d'eau par écumage comportant une chambre de réaction, des moyens d'injection pour apporter, en un orifice d'injection dans la chambre de réaction, l'eau à traiter, des moyens de production d'écume à partir de l'eau à traiter et d'un gaz, et des moyens d'écumage pour recueillir l'écume produite. Dans ce dispositif, les bulles de gaz nécessaires à la flottation sont produites par une réaction catalytique d'une substance chimique telle que du peroxyde d'hydrogène (H₂O₂), avec l'eau à traiter.

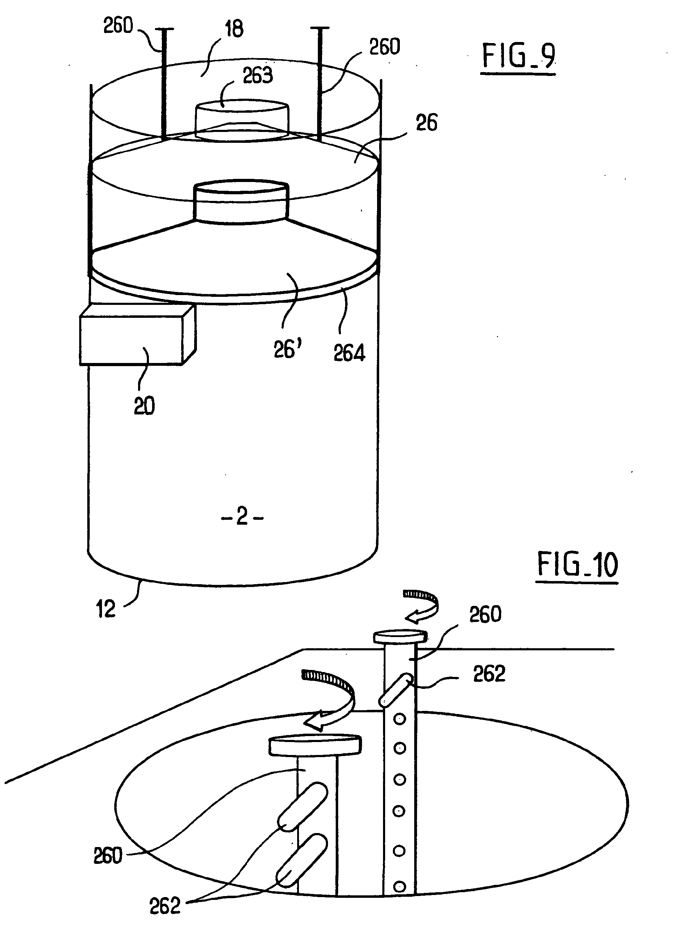

Le document US-5273624 décrit un procédé de séparation d'encre d'une boue fibreuse de papier usagé par écumage et des dispositifs mettant en oeuvre le procédé. Le dispositif constituant l'art antérieur le plus proche, représenté sur la figure 9, est constitué d'une chambre de réaction cylindrique, de moyens d'injection pour apporter, en un orifice d'injection dans la chambre de réaction, la boue à traiter, des moyens de formation de microbulles de gaz dans la boue à traiter, et des moyens positionnés à l'extrémité supérieure de la chambre de réaction et constitués d'une paroi conique ouverte à son extrémité supérieure pour recueillir l'écume produite. Les moyens d'injection de la boue dans la chambre de réaction consistent en une canalisation horizontale débouchant dans ladite chambre de réaction en formant un angle droit (90°) correspondant à l'angle projeté sur un plan horizontal, entre la direction d'injection de l'eau à traiter dans la chambre de réaction et la normale à la surface interne de cette chambre de réaction, au niveau de l'orifice d'injection.

Le document DE-29808690 décrit un dispositif d'écumage d'eau douce ou d'eau de mer afin d'éliminer les principaux éléments organiques. De la même manière que précédemment, le dispositif est constitué d'une chambre de réaction cylindrique, de moyens d'injection pour apporter, en un orifice d'injection dans la chambre de réaction, la boue à traiter, des moyens de formation de microbulles de gaz dans la boue à traiter, et des moyens positionnés à l'extrémité supérieure de la chambre de réaction et constitués d'une paroi conique ouverte à son extrémité supérieure pour recueillir l'écume produite.

Le document DE-19618428 décrit un procédé et un dispositif pour purifier une eau chargée d'éléments biologiques. Le dispositif comprend une chambre de réaction cylindrique, des moyens d'injection pour apporter, en un orifice d'injection dans la chambre de réaction, l'eau à traiter, des moyens de formation de microbulles de gaz dans l'eau à traiter, et des moyens pour recueillir l'écume produite.

Le but de l'invention est de proposer un dispositif et un procédé de traitement d'eau par écumage permettant de réaliser à la fois un enrichissement gazeux (air, oxygène, ozone, etc.) une élimination des matières dissoutes, par écumage, ainsi qu'une élimination de la matière particulaire fine, par flottation, de manière différente de ce qui était proposé par l'art antérieur.

Ce but est atteint grâce à un dispositif de traitement d'eau par écumage, du type defini en revendication 1 annexée, laquelle est délimitée sous forme d'un préambule et d'une partie caractérisante par rapport au document US 5 273 624.

Ainsi, grâce aux moyens de formation de microbulles, on réalise un enrichissement gazeux et grâce aux moyens d'écumage on élimine la matière dissoute et la matière particulaire fine par flottation. Cependant, contrairement à ce qui se passe dans les dispositifs de l'art antérieur, les microbulles sont injectées dans la chambre de réaction, avec l'eau à traiter.

Avantageusement, le dispositif selon l'invention comporte les caractéristiques suivantes, qui peuvent être indépendantes les unes des autres ou combinées entre elles :
- les moyens d'injection créent une circulation cyclonique de l'eau dans la chambre de réaction ;
- les moyens de formation des microbulles comportent un moteur à hélice et une chambre de décompression alimentée en gaz ;
- le gaz est choisi dans la liste comprenant l'air, l'oxygène et l'ozone,
- la chambre de réaction présente une symétrie cylindrique autour d'un axe vertical ;
- le dispositif comporte des moyens de flottaison ;
- la chambre de réaction comporte au moins un orifice d'écoulement de l'eau pour évacuer l'eau de la chambre de réaction, dans l'eau dans laquelle flotte le dispositif ;
- le centre d'un orifice d'écoulement et le centre de l'orifice d'injection sont séparés d'un angle projeté dans un plan horizontal, compris entre 50 à 70°, et préférentiellement de 62 ;
- le dispositif présente quatre orifices d'écoulement séparés d'un angle de 10 à 20°, et préférentiellement de 14°, cet angle ayant son sommet sur un axe vertical situé au centre de la chambre de réaction ;
- les moyens d'injection génèrent une pression telle que, quelque soit la densité de l'eau, le niveau de l'eau dans la cuve est maintenu entre 10 et 20 centimètres, et préférentiellement 15 ± 2 centimètres, au dessus du niveau de l'eau dans laquelle flotte le dispositif ;
- les moyens d'injection injectent l'eau dans la chambre de réaction, sous un angle supérieur à 20°, et plus préférentiellement supérieur à 25°, correspondant à l'angle projeté sur un plan horizontal, entre la direction d'injection de l'eau à traiter dans la chambre de réaction et la normale à la surface interne de cette chambre de réaction, au niveau de l'orifice d'injection ;
- les moyens d'injection injectent l'eau dans la chambre de réaction, sous un angle par rapport à un plan horizontal, compris entre 2 et 15°, et plus préférentiellement entre 5 et 10 ;
- le dispositif comporte une cheminée réglable en hauteur, de manière à contrôler la condensation de l'écume.

Selon un autre aspect, l'invention est un procédé de traitement de l'eau par écumage, tel que défini en revendication 15.

Avantageusement, selon ce procédé on crée également une circulation cyclonique de l'eau dans la chambre de réaction.

Avantageusement aussi, selon ce procédé on fait flotter la chambre de réaction.

D'autres aspects, buts et avantages de l'invention seront mieux compris à l'aide de la description détaillée qui suit. L'invention sera également mieux comprise à l'aide des références aux dessins sur lesquels :
- la figure 1 est une représentation schématique, en vue de côté, d'un mode de réalisation d'un dispositif conforme à la présente invention ;
- la figure 2 est une représentation schématique en coupe verticale du dispositif selon l'invention représenté à la figure 1 ;
- la figure 3 est une vue schématique de dessus, couvercle enlevé, du dispositif selon l'invention représenté aux figures 1 et 2 ;
- la figure 4 représente schématiquement en coupe transversale les moyens de formation de microbulles du dispositif représenté sur les figures 1 à 3 ;
- la figure 5 représente schématiquement les écarts de position angulaire entre l'orifice d'injection et les orifices d'écoulement de l'eau, dans la chambre de réaction du dispositif selon l'invention représenté sur les figures 1 à3;
- la figure 6 représente schématiquement l'orientation du flux d'eau à traiter, en sortie de l'orifice d'injection, dans la chambre de réaction du dispositif représenté sur les figures 1 à 3 et 5 ;
- la figure 7 représente schématiquement, en coupe verticale la chambre de condensation du dispositif selon l'invention, représenté sur les figures 1 à 3 et 5 et 6;
- la figure 8 représente schématiquement en coupe verticale, une variante du dispositif selon l'invention représenté sur les figures 1 à 3 et 5 à 7 ;
- la figure 9 représente schématiquement un cône disposé entre la chambre de réaction et la chambre de condensation, et réglable en hauteur ; et
- la figure 10 représente schématiquement un mode de réalisation particulier de moyens de réglage en hauteur du cône précité.

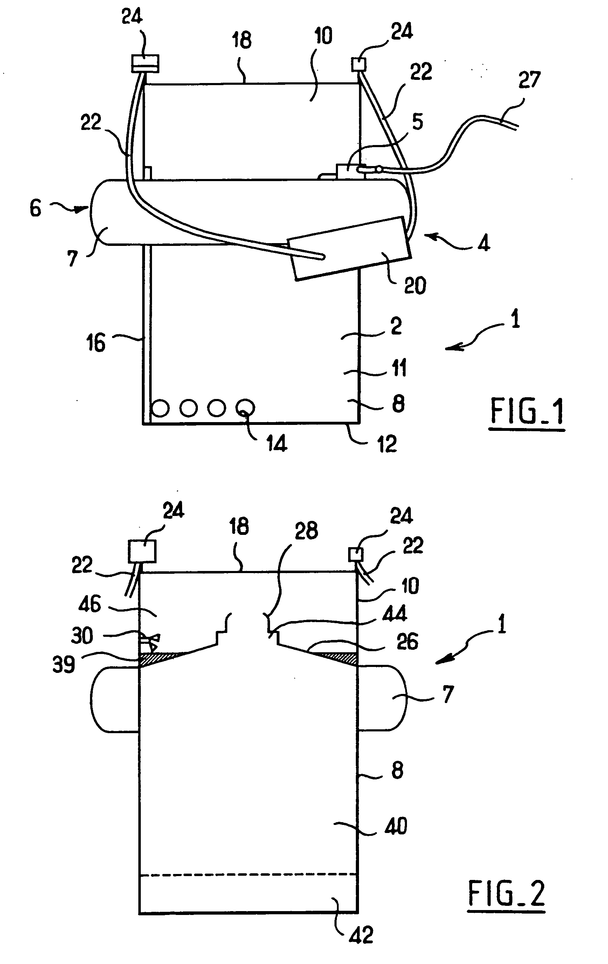

Un exemple de mode de réalisation d'un dispositif de traitement d'eau par écumage conforme à la présente invention est décrit ci-dessous en relation avec les figures 1 à 7.

Selon ce mode de réalisation, le dispositif 1 selon l'invention est destiné à être immergé directement dans un bassin contenant de l'eau à traiter.

Comme représenté sur la figure 1, ce dispositif 1 de traitement d'eau comporte une cuve cylindrique 2, des moyens d'injection et de formation de microbulles 4, d'un dispositif de pompage 5 de l'écume formée grâce aux moyens d'injection et de formation de microbulles 4, ainsi que des moyens de flottaison 6.

La cuve cylindrique 2 est composée d'une chambre de réaction 8 et d'une chambre de condensation 10, cylindriques autour d'un axe vertical. La chambre de réaction 8 sert à développer la formation d'écume. La chambre de condensation 10 reçoit l'écume formée dans la chambre de réaction 8.

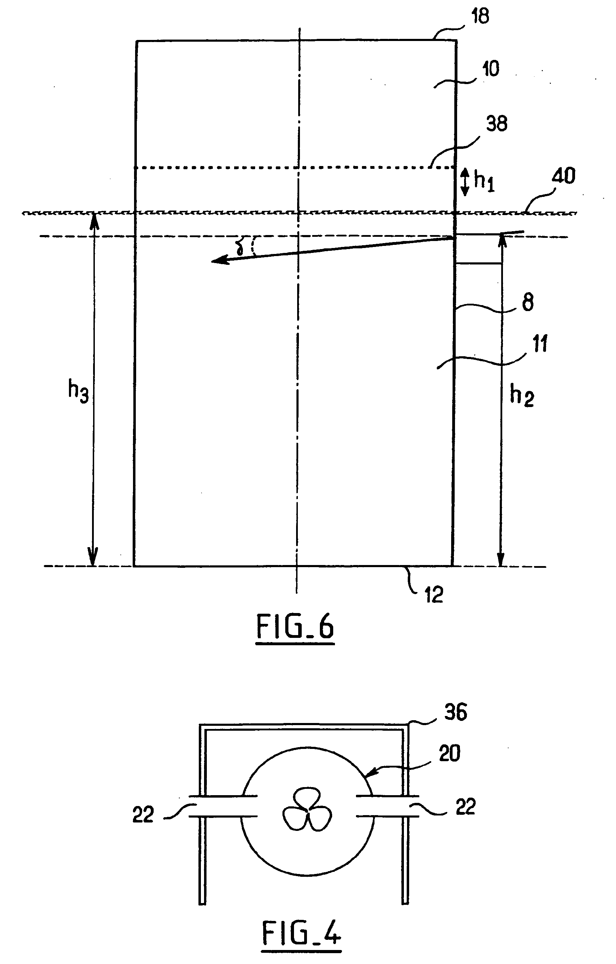

La chambre de réaction 8 est fermée à son extrémité inférieure d'une paroi inférieure 12. En fonctionnement, elle contient une colonne d'eau 11. Elle est munie à proximité de la paroi inférieure 12 de quatre orifices d'écoulement 14. La section totale de ces orifices d'écoulement 14 doit entraîner une surpression dans la chambre de réaction 8, d'environ d'une hauteur h₁=150 mm (voir figure 6). Ainsi, pour une chambre de réaction 8 de 100 cm de diamètre, dans laquelle circule un volume d'eau de l'ordre de 100 m³ par heure, la section totale des trous d'écoulement 14 est voisine de 300 cm². La chambre de réaction 8 est aussi munie d'un indicateur 16 de niveau. Cet indicateur 16 est par exemple constitué d'un tube transparent relié à l'extrémité inférieure de la chambre de réaction 8. Le niveau d'eau de la chambre de réaction 8 est alors visible sur l'indicateur 16.

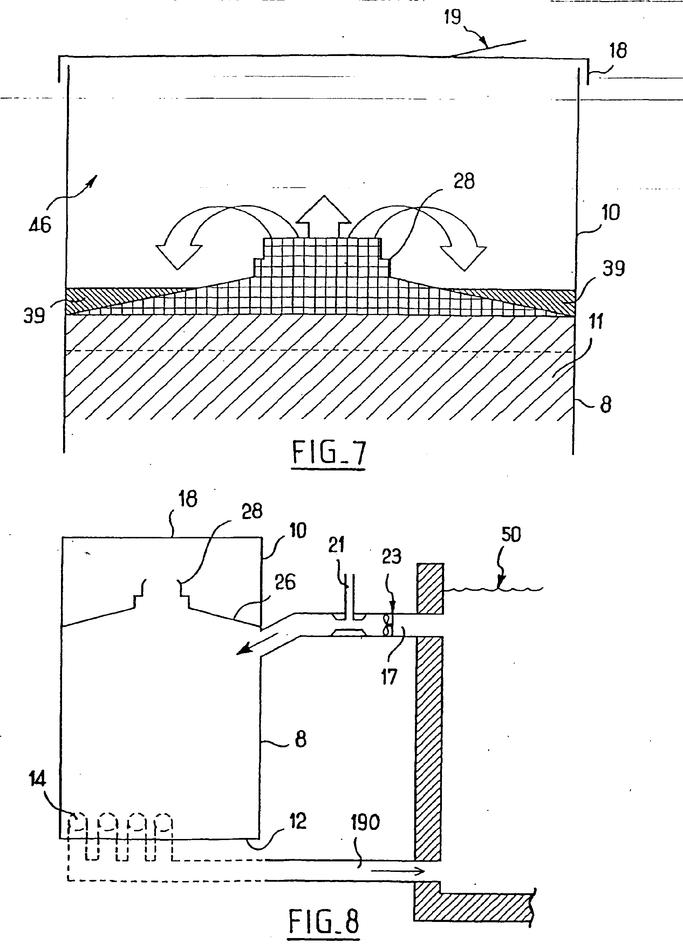

La chambre de condensation 10 comporte un couvercle 18 et un cône de condensation 26, séparant la chambre de réaction 8 de la chambre de condensation 10 proprement dite (Voir figure 2). Le couvercle 18 ferme la chambre de condensation 10 pour éviter l'échappement de l'écume ou son entraînement par le vent. Pour éviter d'avoir une pression supérieure à la pression atmosphérique dans la chambre de condensation 10, le couvercle 18 est muni d'un clapet 19 ou de petites perforations laissant sortir l'air en retenant l'écume (Voir figure 7). Le cône de condensation 26 est constitué d'une paroi en tronc de cône dont l'ouverture la plus petite se trouve dirigée vers le haut. Le cône de condensation 26 est prolongé vers le haut, d'une cheminée 28.

Pour permettre un réglage de la production d'écume lié au pouvoir écumant de l'eau, le cône de condensation 26 est mobile verticalement et réglable en hauteur. Pour cela il est monté à coulissement de façon étanche le long de la cuve cylindrique 2. Un tel réglage permet de réduire ou d'augmenter à volonté, le volume de la chambre de réaction 8. De préférence des moyens d'étanchéité, tels qu'un joint torique 264, sont prévus en périphérie du cône 26, pour assurer l'étanchéité entre la périphérie du cône 26 et la cuve 2, quelque soit la position retenue pour le cône 26. La fixation du cône 26, par rapport à la cuve 2, dans la position retenue, peut être réalisée à l'aide de tous moyens appropriés. A titre d'exemple non limitatif, la fixation du cône 26 peut être obtenue à l'aide de tiges verticales 260 solidaires de la surface supérieure du cône 26 et et munies de crans 262 non symétriques de révolution répartis sur la longueur des tiges 260. Le couvercle fixe 18 est muni quant à lui d'ouvertures oblongues de géométrie complémentaire des crans 262 précités. Pour autoriser un déplacement vertical du cône 26, les crans 262 sont alignés sur les ouvertures du couvercle pour traverser celles-ci. Le cône 26 est immobilisé dès que des crans 262 orientés transversalement aux ouvertures du couvercle, reposent sur celui-ci.

Par ailleurs pour permettre un second réglage plus fin, la cheminée 28 peut elle-même être réglable en hauteur par rapport au cône 26, pour permettre un réglage du débit de l'écume sortant de la chambre de réaction 8.

La chambre de condensation 10 est en outre munie d'un interrupteur 30. Cet interrupteur 30 est situé à une altitude inférieure à celle du haut du cône de condensation 26. Cet interrupteur 30 déclenche la mise en route automatique du dispositif de pompage 5.

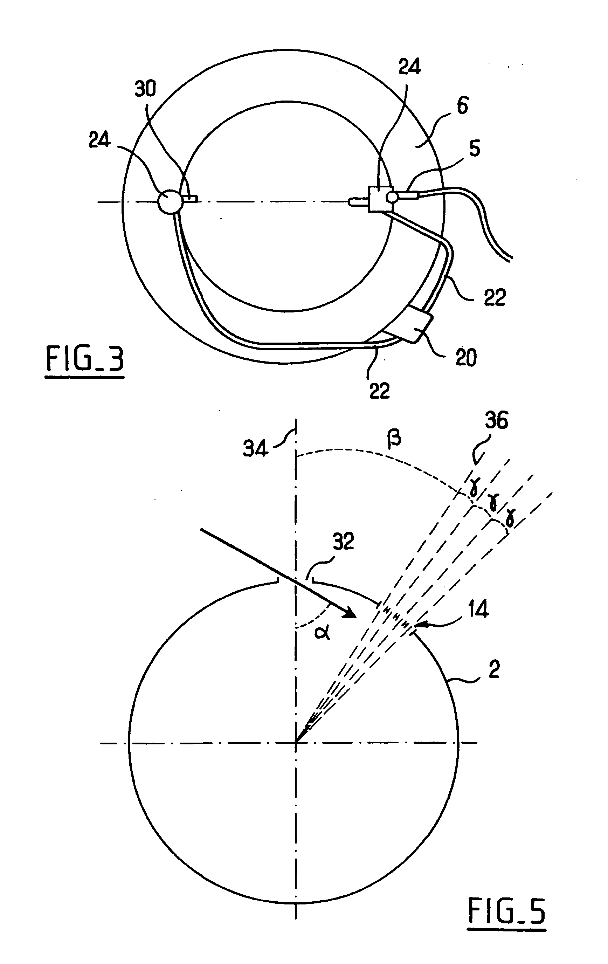

Les moyens d'injection et de formation des microbulles 4 sont constitués d'un bloc aérateur venturi 20 à hélice, de deux conduites 22 et de bouches d'aspiration 24. Il est situé sous les moyens de flottaison 6. Chaque conduite 22 relie de manière indépendante le bloc aérateur venturi 20 à une bouche d'aspiration 24 située au niveau du couvercle 18. Les conduites 22 sont branchées sur le bloc aérateur venturi 20 de manière symétrique par rapport à son axe longitudinal (voir figures 3 et 4).

Comme représenté sur la figure 4, le bloc aérateur venturi 20 est recouvert d'une cornière 36 en U inversé, qui sert à la fois à fixer le bloc aérateur venturi 20 à la cuve cylindrique 2 et à éviter que l'eau aspirée par le bloc aérateur venturi 20 n'entraîne avec elle de l'air provenant de la surface de l'eau du bassin dans laquelle est immergé le dispositif 1. Le bloc aérateur venturi 20 est orientable par basculement autour d'un axe horizontal passant par les conduites 22.

Le bloc aérateur venturi 20 produit des bulles très fines, encore appelées microbulles, dans l'eau à traiter. Il correspond par exemple au bloc aérateur venturi décrit dans le document EP 562 314. Il produit donc un flux de fluide, constitué d'eau et d'air. Ce fluide est injecté dans la chambre de réaction 8 par un orifice d'injection 32.

Comme représenté sur la figure 5, la projection dans un plan horizontal de la direction d'injection, dans la chambre de réaction 2, du fluide issu du bloc aérateur venturi 20 fait un angle projeté α par rapport au rayon 34 joignant l'axe vertical central de la chambre de réaction 2 à l'orifice d'injection 32. Cet angle α est environ égal à 70°.

L'angle entre le rayon 34 et le rayon 36 passant par le centre de l'orifice d'écoulement 14 le plus proche de l'orifice d'injection 32, projeté dans un plan horizontal correspond à un angle β. Cet angle β est égal à 60° environ.

Les orifices d'écoulement 14 sont espacés angulairement d'un angle γ égal à 14°.

Comme représenté sur la figure 6, le flux de fluide, constitué d'eau et d'air, en sortie du bloc aérateur-venturi 20 est injecté dans la chambre de réaction 8 avec un angle δ compris entre 5° et 10° sous un plan horizontal.

Le centre de l'orifice d'injection 32 est situé à une hauteur environ égale à h₂=80 cm de la paroi inférieure 12 (voir figure 6).

Les moyens de flottaison 6 sont constitués d'un flotteur extérieur 7. Le flotteur 7 permet de maintenir le dispositif 1 à un niveau bien défini par rapport à la surface de l'eau du bassin, ainsi que le niveau d'écume souhaité à l'intérieur de la chambre de réaction 2. Les moyens de flottaison 6 sont adaptés pour que, quelle que soit la densité de l'eau c'est-à-dire en particulier sa salinité, la ligne de flottaison 40 soit à une hauteur h₃=95 ± 2 cm, par rapport à la paroi inférieure 12 (voir figure 6).

Le fonctionnement du dispositif 1 décrit structurellement plus haut est décrit ci-dessous.

Le bloc aérateur venturi 20 aspire à la fois de l'eau provenant du bassin dans lequel le dispositif 1 est immergé et de l'air provenant, par les conduites 22, de la surface de ce bassin. Le bloc aérateur venturi 20 mélange les deux et injecte le fluide constitué du mélange dans la chambre de réaction 8 de manière à développer une circulation de type cyclonique dans la colonne d'eau 11. La colonne d'eau 11 monte alors légèrement en pression, élevant le niveau d'eau intérieur 38, visible sur l'indicateur 16, légèrement au-dessus de la ligne de flottaison 40 (voir figure 6). Les microbulles formées remontent vers la surface et forment l'écume, qui s'accumule sous le cône de concentration 26, tandis que l'eau traitée s'échappe par les orifices d'écoulement 14. L'écume sort par la cheminée 28. Après un certain temps d'accumulation dans la chambre de condensation 10, l'écume se condense sous forme liquide dans la partie de la chambre de condensation 10 située sous le niveau de l'orifice supérieur du cône de condensation 28. Elle forme un condensat 39 (voir figure 7). Le condensat 39, lorsqu'il atteint un niveau suffisant, déclenche l'interrupteur 30 qui met en route le dispositif de pompage 5. Le condensat 39 est alors évacué par une tuyauterie 27 vers une unité de stockage ou de recyclage de l'écume.

Comme représenté sur la figure 2, le dispositif 1 comporte en fonctionnement quatre zones bien distinctes :
- une zone de contact air/eau 40 où s'effectuent les échanges physiques entre les microbulles et l'eau à injecter,
- une zone d'eau traitée 42 dépourvue de microbulles, où sont situés les orifices d'écoulement 14,
- la zone de concentration de l'écume 44, entre le niveau de l'eau dans la chambre de réaction 8 et le cône de condensation, et
- la zone de condensation de l'écume 46, où le condensat 39 est stocké et pompé.

Les performances du dispositif 1 dépendent de la qualité de l'eau à traiter et de son pouvoir écumant.

Le dispositif 1 décrit ci-dessus a une capacité de traitement de 100 m³ d'eau par heure et condense dans ces conditions jusqu'à 30 litres d'écume par heure. Le réglage du niveau intérieur 38 de la colonne d'eau 11 en surpression à l'intérieur de la chambre de réaction 8, par rapport au niveau de flottaison 40 est un paramètre particulièrement important. En effet, si ce niveau intérieur 38 est trop haut, l'écume formée produit un condensat 39 peu concentré. Si ce niveau intérieur 38 est trop bas, l'écume ne sort pas convenablement dans la chambre de condensation 10.

Grâce au dispositif 1, il est possible de concentrer dans les écumes des éléments dissous, ainsi que des particules dont la taille est majoritairement comprise entre 1 micron et 10 microns.

A titre d'exemple, le condensat 39 accumule environ 50 à 100 mg de carbone organique dissous par litre d'eau traitée, lorsque l'eau à traiter en contient 2 à 4 mg par litre. De même, le condensat 39 accumule 1000 à 5000 mg de matière particulaire sèche par litre d'eau traitée, lorsque l'eau à traiter en contient 10 à 20 mg par litre.

Le dispositif de traitement d'eau par écumage conforme à l'invention peut être réalisé selon de nombreuses variantes.

Selon l'une de ces variantes, par exemple, les moyens d'injection 4 sont constitués d'un accessoire d'aération à effet venturi 21.

Selon une autre de ces variantes, le dispositif de traitement d'eau selon l'invention n'est pas immergé et est réalisé sous la forme d'un appareil à poser à coté d'un bassin-réservoir 50 contenant l'eau à traiter.

Un exemple de variante de dispositif selon l'invention est illustré par la figure 8. Celui-ci est réalisé sous la forme d'un appareil à poser à coté d'un bassin réservoir 50 muni de moyens d'injection 4 constitués d'un accessoire d'aération à effet venturi 21, conjugué avec une autre pompe centrifuge à eau 23.

Ce dispositif fonctionne en boucle. Deux conduites relient l'appareil avec le bassin-réservoir 50 pour amener respectivement le mélange air et eau à traiter et évacuer l'eau traitée. L'accessoire d'aération à effet venturi 21 permet l'aspiration d'air et la formation des microbulles dans le panache de la pompe 23. Les chambres de réaction 8 et de condensation 10 sont similaires à celles décrites en relation avec les figures 1 à 3 et 5 et 6. De même, les angles d'injection α, δ, la vitesse et le débit de l'eau entrante ainsi que la pression dans la chambre de réaction 8 sont analogues à ceux cités en relation avec la description du dispositif objet des figures 1 à 7. Par contre, la section des orifices d'écoulement en partie basse, est augmentée de façon à compenser les pertes de charge supplémentaires dues à la conduite d'évacuation 190.

Le dispositif de traitement d'eau selon l'invention peut être utilisé pour condenser des bactéries, des particules très fines, etc., qui ne peuvent pas être arrêtés par les filtres mécaniques classiques qui filtrent des éléments dont la taille est supérieure à 30 microns.

Différentes applications peuvent être envisagées pour le dispositif selon l'invention. On citera par exemple le traitement d'eau d'aquaculture, l'épuration d'eau par l'écumage, le traitement d'eau dans des lieux de loisirs tels que des étangs de baignade, l'écumage de l'eau des ports (pour limiter l'encrassement des bateaux).

II a été décrit ci-dessus un dispositif 1 produisant de l'écume à partir d'un mélange air/eau, mais d'autres gaz que l'air peuvent être utilisés. Par exemple, pour certains traitements de l'eau, on pourra utiliser l'ozone pour son pouvoir stérilisateur ou bien encore l'oxygène.

## Revendications

1. Dispositif de traitement d'eau par écumage, comportant
- une chambre de réaction (8),
- des moyens d'injection (4) pour apporter, en un orifice d'injection dans la chambre de réaction, l'eau à traiter,
- des moyens d'injection de microbulles (20) de gaz avec l'eau à traiter, dans la chambre de réaction (8)
- une chambre de condensation (10) qui surmonte la chambre de réaction (8) ces deux chambres (8, 10) étant séparées par un cône (26) muni d'au moins une ouverture,
**caractérisé par le fait que** le cône (26) séparant la chambre de réaction (8) et la chambre de condensation (10) est réglable en hauteur.

2. Dispositif selon la revendication 1, **caractérisé par le fait que** les moyens d'injection (4) créent une circulation cyclonique de l'eau dans la chambre de réaction (8).

3. Dispositif selon l'une des revendications précédentes, **caractérisé par le fait que** les moyens de formation de microbulles (20) comportent un moteur à hélice et une chambre de décompression alimentée en gaz.

4. Dispositif selon la revendication 3, **caractérisé par le fait que** le gaz est choisi dans la liste comprenant l'air, l'oxygène et l'ozone.

5. Dispositif selon l'une des revendications précédentes, **caractérisé par le fait que** la chambre de réaction (8) présente une symétrie cylindrique autour d'un axe vertical.

6. Dispositif selon l'une des revendications précédentes, **caractérisé par le fait qu'**il comporte des moyens de flottaison (6).

7. Dispositif selon la revendication 6, **caractérisé par le fait que** la chambre de réaction (8) comporte au moins un orifice d'écoulement (14) de l'eau pour évacuer l'eau de la chambre de réaction (8), dans l'eau dans laquelle flotte le dispositif (1).

8. Dispositif selon la revendication 7, **caractérisé par le fait que** le centre d'un orifice d'écoulement (14) et le centre de l'orifice d'injection (32) sont séparés d'un angle (α) projeté dans un plan horizontal, de 50 à 70°, et préférentiellement de 62°.

9. Dispositif selon l'une des revendications 7 et 8, **caractérisé par le fait qu'**il présente quatre orifices d'écoulement (14) séparés d'un angle (γ) de 10 à 20° et préférentiellement de 14°, cet angle (γ) ayant son sommet sur un axe vertical situé au centre de la chambre de réaction.

10. Dispositif selon l'une des revendications 6 à 9, **caractérisé par le fait que** les moyens d'injection (4) génèrent une pression telle que, quelque soit la densité de l'eau, le niveau de l'eau dans la cuve (38) est maintenu entre 10 et 20 centimètres, et préférentiellement 15 ± 2 centimètres, au-dessus du niveau de l'eau (40) dans laquelle flotte le dispositif (1).

11. Dispositif selon l'une des revendications précédentes, **caractérisé par le fait que** les moyens d'injection (4) injectent l'eau dans la chambre de réaction (8), sous un angle (β) supérieur à 20°, et plus préférentiellement supérieur à 25°, correspondant à l'angle projeté sur un plan horizontal, entre la direction d'injection de l'eau à traiter dans la chambre de réaction (8) et la normale à la surface interne de cette chambre de réaction (8), au niveau de l'orifice d'injection (32).

12. Dispositif selon l'une des revendications précédentes, **caractérisé par le fait que** les moyens d'injection (4) injectent l'eau dans la chambre de réaction (8), sous un angle par rapport à un plan horizontal, compris entre 2 et 15°, et plus préférentiellement entre 5 et 10°.

13. Dispositif selon l'une des revendications 1 à 12, **caractérisé par le fait qu'**il comprend des moyens (260, 262) aptes à immobiliser le cône (26) en position choisie.

14. Dispositif selon l'une des revendications précédentes, **caractérisé par le fait qu'**il comporte une cheminée (28) réglable en hauteur, de manière à contrôler la condensation de l'écume.

15. Procédé de traitement de l'eau par écumage, dans lequel
- on injecte l'eau à traiter dans une chambre de réaction (8),
- on forme des microbulles de gaz dans l'eau à traiter en injectant les microbulles dans la chambre de réaction (8) avec l'eau à traiter,
- on sépare l'écume produite de l'eau à traiter, dans une chambre de condensation (10) qui surmonte la chambre de réaction (8) et est séparée de cette dernière par un cône (26) muni d'au moins une ouverture
**caractérisé par le fait que** l'on règle la hauteur du cône (26) pour optimiser la production d'écume en fonction du pouvoir écumant de l'eau.

16. Procédé selon la revendication 15. **caractérisé par le fait que** l'on crée une circulation cyclonique de l'eau dans la chambre de réaction (8).

17. Procédé selon l'une des revendications 15 et 16, **caractérisé par le fait que** l'on fait flotter la chambre de réaction (8).

## Claims

1. Apparatus for treating water by skimming, the apparatus comprising:
· a reaction chamber (8);
· injector means (4) for delivering the water for treatment via an injection orifice into the reaction chamber;
· means (20) for injecting microbubbles of gas into the reaction chamber (8) together with the water for treatment; and
· a condensation chamber (10) which surmounts the reaction chamber (8), these two chambers (8, 10) being separated by a cone (26) provided with at least one opening,
the apparatus being **characterized by** the fact that the cone (26) separating the reaction chamber (8) from the condensation chamber (10) is adjustable in height.

2. Apparatus according to claim 1, **characterized by** the fact that the injector means (4) create cyclonic circulation of the water in the reaction chamber (8).

3. Apparatus according to either preceding claim, **characterized by** the fact that the means (20) for forming microbubbles comprise a motor-driven propeller and a decompression chamber fed with gas.

4. Apparatus according to claim 3, **characterized by** the fact that the gas is selected from the list comprising: air; oxygen; and ozone.

5. Apparatus according to any preceding claim, **characterized by** the fact that the reaction chamber (8) is circularly cylindrical about a vertical axis.

6. Apparatus according to any preceding claim, **characterized by** the fact that it includes flotation means (6).

7. Apparatus according to claim 6, **characterized by** the fact that the reaction chamber (8) has at least one water flow orifice (14) for discharging water from the reaction chamber (8) into the water in which the apparatus (1) is floating.

8. Apparatus according to claim 7, **characterized by** the fact that, in projection onto a horizontal plane, the center of a flow orifice (14) and the center of the injection orifice (32) are separated by an angle (α) lying in the range 50° to 70°, and preferably equal to 62°.

9. Apparatus according to claim 7 or claim 8, **characterized by** the fact that it presents four flow orifices (14) separated by an angle (γ) lying in the range 10° to 20°, and preferably equal to 14°, said angle (γ) having its vertex on a vertical axis situated in the center of the reaction chamber.

10. Apparatus according to any one of claims 6 to 9, **characterized by** the fact that the injector means (4) generate a pressure such that regardless of the density of the water, the water level inside the vessel (38) is maintained in the range 10 cm to 20 cm, and preferably 15 cm ± 2 cm above the level of the water (40) in which the apparatus (1) is floating.

11. Apparatus according to any preceding claim, **characterized by** the fact that the injector means (4) inject water into the reaction chamber (8) at an angle (β) greater than 20°, and preferably greater than 25°, corresponding to the angle as projected onto a horizontal plane between the direction in which the water for treatment is injected into the reaction chamber (8) and the normal to the inside surface of said reaction chamber (8) at the injection orifice (32).

12. Apparatus according to any preceding claim, **characterized by** the fact that the injector means (4) inject the water into the reaction chamber (8) at an angle relative to a horizontal plane that lies in the range 2° to 15°, and more preferably in the range 5° to 10°.

13. Apparatus according to any one of claims 1 to 12, **characterized by** the fact that it includes means (260, 262) suitable for holding the cone (26) stationary in a selected position.

14. Apparatus according to any preceding claim, **characterized by** the fact that it includes a chimney (28) that is adjustable in height so as to control condensation of the foam.

15. A method of treating water by skimming, in which:
- the water for treatment is injected into a reaction chamber (8);
- microbubbles of gas are formed in the water for treatment by injecting the microbubbles into the reaction chamber (8) together with the water for treatment; and
- the foam that is produced is separated from the water for treatment in a condensation chamber (10) which surmounts the reaction chamber (8) and is separated from said reaction chamber by a cone (26) provided with at least one opening,
the method being **characterized by** the fact that the height of the cone (26) is adjusted so as to optimize the production of foam as a function of the foaming power of the water.

16. A method according to claim 15, **characterized by** the fact that cyclonic circulation of the water is established inside the reaction chamber (8).

17. A method according to claim 15 or claim 16, **characterized by** the fact that the reaction chamber (8) is caused to float.

## Patentansprüche

1. Vorrichtung zur Behandlung von Wasser durch Schäumen, die folgendes umfaßt:
- eine Reaktionskammer (8),
- Einspritzmittel (4), um durch eine Einspritzöffnung in der Reaktionskammer das zu behandelnde Wasser einzubringen,
- Mittel zum Einspritzen von Mikrogasblasen (20) mit dem zu behandelnden Wasser in die Reaktionskammer (8),
- eine Kondensationskammer (10), die über der Reaktionskammer (8) liegt, wobei die zwei Kammern (8, 10) durch einen Kegel (26) getrennt sind, der mit wenigstens einer Öffnung ausgestattet ist,
**dadurch gekennzeichnet, daß** der Kegel (26), der die Reaktionskammer (8) und die Kondensationskammer (10) trennt, in der Höhe einstellbar ist.

2. Vorrichtung nach Anspruch 1, **dadurch gekennzeichnet, daß** die Einspritzmittel (4) eine Wirbelzirkulation des Wassers in der Reaktionskammer (8) erzeugen.

3. Vorrichtung nach einem der vorhergehenden Ansprüche, **dadurch gekennzeichnet, daß** die Mittel zum Ausbilden von Mikroblasen (20) einen Schraubenmotor und eine mit Gas versorgte Dekompressionskammer umfassen.

4. Vorrichtung nach Anspruch 3, **dadurch gekennzeichnet, daß** das Gas aus der Liste gewählt ist, die Luft, Sauerstoff und Ozon umfaßt.

5. Vorrichtung nach einem der vorhergehenden Ansprüche, **dadurch gekennzeichnet, daß** die Reaktionskammer (8) eine Zylindersymmetrie um eine vertikale Achse hat.

6. Vorrichtung nach einem der vorhergehenden Ansprüche, **dadurch gekennzeichnet, daß** sie Schwimmermittel (6) umfaßt.

7. Vorrichtung nach Anspruch 6, **dadurch gekennzeichnet, daß** die Reaktionskammer (8) wenigstens eine Wasserabflußöffnung (14) umfaßt, um das Wasser von der Reaktionskammer (8) in das Wasser, in dem die Vorrichtung (1) schwimmt, abzuführen.

8. Vorrichtung nach Anspruch 7, **dadurch gekennzeichnet, daß** der Mittelpunkt einer Abflußöffnung (14) und der Mittelpunkt der Einspritzöffnung (32) um einen in eine horizontale Ebene projizierten Winkel (α) von 50 bis 70° und vorzugsweise von 62° auseinander liegen.

9. Vorrichtung nach einem der Ansprüche 7 und 8, **dadurch gekennzeichnet, daß** sie vier Abflußöffnungen (14) umfaßt, die um einen Winkel (γ) von 10 bis 20° und vorzugsweise von 14° auseinander liegen, wobei dieser Winkel (γ) seinen Scheitelpunkt auf einer vertikalen Achse hat, die sich im Mittelpunkt der Reaktionskammer befindet.

10. Vorrichtung nach einem der Ansprüche 6 bis 9, **dadurch gekennzeichnet, daß** die Einspritzmittel (4) einen solchen Druck erzeugen, daß unabhängig von der Dichte des Wassers der Wasserstand im Behälter (38) zwischen 10 und 20 Zentimeter und vorzugsweise 15 ± 2 Zentimeter über dem Stand des Wassers (40) gehalten wird, in dem die Vorrichtung (1) schwimmt.

11. Vorrichtung nach einem der vorhergehenden Ansprüche, **dadurch gekennzeichnet, daß** die Einspritzmittel (4) das Wasser in die Reaktionskammer (8) unter einem Winkel (β) einspritzen, der größer als 20° und mit noch mehr Vorzug größer als 25° ist, wobei dies dem auf eine horizontale Ebene projizierten Winkel zwischen der Einspritzrichtung des zu behandelnden Wassers in die Reaktionskammer (8) und der Normalen zur Innenfläche dieser Reaktionskammer (8) im Bereich der Einspritzöffnung (32) entspricht.

12. Vorrichtung nach einem der vorhergehenden Ansprüche, **dadurch gekennzeichnet, daß** die Einspritzmittel (4) das Wasser in die Reaktionskammer (8) unter einem Winkel in Bezug auf eine horizontale Ebene einspritzen, der zwischen 2 und 15° und mit noch mehr Vorzug zwischen 5 und 10° liegt.

13. Vorrichtung nach einem der Ansprüche 1 bis 12, **dadurch gekennzeichnet, daß** sie Mittel (260, 262) umfaßt, die dafür eingerichtet sind, den Kegel (26) in einer gewünschten Position festzustellen.

14. Vorrichtung nach einem der vorhergehenden Ansprüche, **dadurch gekennzeichnet, daß** sie einen Schacht (28) umfaßt, der derart in der Höhe einstellbar ist, daß die Kondensation des Schaums gesteuert werden kann.

15. Verfahren zur Behandlung von Wasser durch Schäumen, bei dem
- das zu behandelnde Wasser in eine Reaktionskammer (8) eingespritzt wird,
- im zu behandelnden Wasser Gasmikroblasen ausgebildet werden, wobei die Mikroblasen mit dem zu behandelnden Wasser in die Reaktionskammer (8) eingespritzt werden,
- der erzeugte Schaum vom zu behandelnden Wasser in einer Kondensationskämmer (10) getrennt wird, die über der Reaktionskammer (8) liegt und von dieser letzteren durch einen Kegel (26) getrennt ist, der mit wenigstens einer Öffnung ausgestattet ist,
**dadurch gekennzeichnet, daß** die Höhe des Kegels (26) eingestellt wird, um die Schaumproduktion in Abhängigkeit vom Schäumungsvermögen des Wassers zu optimieren.

16. Verfahren nach Anspruch 15, **dadurch gekennzeichnet, daß** eine Wirbelzirkulation des Wassers in der Reaktionskammer (8) erzeugt wird.

17. Verfahren nach einem der Ansprüche 15 und 16, **dadurch gekennzeichnet, daß** man die Reaktionskammer (8) schwimmen läßt.
